(19) Europäisches Patentamt
European Patent Office
Office européen des brevets

(11) **EP 2 743 284 A1**

(12) **EUROPÄISCHE PATENTANMELDUNG**

(43) Veröffentlichungstag:
**18.06.2014  Patentblatt 2014/25**

(21) Anmeldenummer: **12197031.3**

(22) Anmeldetag: **13.12.2012**

(51) Int Cl.:
**C08G 18/48** (2006.01)   **C08G 18/66** (2006.01)
**C08G 18/72** (2006.01)   **C08G 18/73** (2006.01)
**C08G 18/76** (2006.01)   **C08K 3/34** (2006.01)
**C08G 18/32** (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **BASF SE**
**67056 Ludwigshafen (DE)**

(72) Erfinder: **Die Erfindernennung liegt noch nicht vor**

(54) **Hydrolysestabiles Polyurethan zur Beschichtung von Elementen in maritimen Anwendungen**

(57)    Die vorliegende Erfindung betrifft ein Verfahren zur Herstellung von mit Polyurethan beschichteten Leitungselementen und deren Verwendung vorzugsweise in maritimen Umgebungen bei dem man (a) eine Mischung aus aromatischem und aliphatischen Polyisocyanat mit (b) mindestens einer polymeren Verbindung mit mindestens zwei gegenüber Isocyanat reaktiven Wasserstoffatomen, (c) Kettenverlängerungsmittel mit einer Funktionalität von 2 bis 4 und einer Hydroxylzahl von 500 bis 2500 mg KOH/g, (d) Katalysator und (e) gegebenenfalls sonstigen Hilfsmitteln und/oder Zusatzstoffen, zu einer Reaktionsmischung vermischt, die Reaktionsmischung direkten oder indirekten auf ein geeignetes Substrat aufträgt und zu einer Polyurethanschicht ausreagieren lässt, wobei die Kettenverlängererkennzahl KV der Isocyanate (a) sowie aller gegenüber Isocyanaten reaktiven Verbindungen der Komponenten (b) bis (e) gemäß der Formel (1)

$$KV = \frac{M(aromat.\ Isocyanat) \cdot NCO\ (aromat.\ Isocyanat) \cdot 56100}{M(Kettenverlängerer) \cdot OHZ(Kettenverlängerer) \cdot 4200} \cdot 100 \qquad (1)$$

1 bis 100 beträgt, wobei M(aromat. Isocyanat) für den Gewichtsanteil des aromatischen Isocyanats, angegebenen in Gew.-%, bezogen auf die Summe aus dem Gesamtgewicht an eingesetztem Isocyanat und gegenüber Isocyanaten reaktiven Verbindungen der Komponenten (b) bis (e), steht, NCO(aromat.Isocyanat) für den NCO-Gehalt des aromatischen Isocyanats, angegeben in Gew.-%, steht, und M(Kettenverlängerer) für den Gewichtsanteil des Kettenverlängerers, angegebenen in Gew.-%, bezogen auf die Summe aus dem Gesamtgewicht an eingesetztem Isocyanat und der gegenüber Isocyanaten reaktiven Verbindungen in den Komponenten (b) bis (e), steht. Weiter betrifft die vorliegende Erfindung Leitungselemente, erhältlich nach einem solchen Verfahren.

EP 2 743 284 A1

**Beschreibung**

Die vorliegende Erfindung betrifft ein Verfahren zur Herstellung von mit Polyurethan beschichteten Leitungselementen und deren Verwendung vorzugsweise in maritimen Umgebungen bei dem man (a) eine Mischung aus aromatischem und aliphatischen Polyisocyanat mit (b) mindestens einer polymeren Verbindung mit mindestens zwei gegenüber Isocyanat reaktiven Wasserstoffatomen, (c) Kettenverlängerungsmittel mit einer Funktionalität von 2 bis 4 und einer Hydroxylzahl von 500 bis 2500 mg KOH/g, (d) Katalysator und (e) gegebenenfalls sonstigen Hilfsmitteln und/oder Zusatzstoffen, zu einer Reaktionsmischung vermischt, die Reaktionsmischung direkten oder indirekten auf ein Leitungselement aufträgt und zu einer Polyurethanschicht ausreagieren lässt, wobei die Kettenverlängererkennzahl KV der Isocyanate (a) sowie aller gegenüber Isocyanaten reaktiven Verbindungen der Komponenten (b) bis (e) gemäß der Formel (1)

$$KV = \frac{M(aromat.\ Isocyanat) \cdot NCO\ (aromat.\ Isocyanat) \cdot 56100}{M(Kettenverl\ddot{a}ngerer) \cdot OHZ(Kettenverl\ddot{a}ngerer) \cdot 4200} \cdot 100 \qquad (1)$$

1 bis 100 beträgt, wobei M(aromat. Isocyanat) für den Gewichtsanteil des aromatischen Isocyanats, angegebenen in Gew.-%, bezogen auf die Summe aus dem Gesamtgewicht an eingesetztem Isocyanat und gegenüber Isocyanaten reaktiven Verbindungen der Komponenten (b) bis (e), steht, NCO(aromat. Isocyanat) für den NCO-Gehalt des aromatischen Isocyanats, angegeben in Gew.-%, steht, und M(Kettenverlängerer) für den Gewichtsanteil des Kettenverlängerers, angegebenen in Gew.-%, bezogen auf die Summe aus dem Gesamtgewicht an eingesetztem Isocyanat und der gegenüber Isocyanaten reaktiven Verbindungen in den Komponenten (b) bis (e), steht. Weiter betrifft die vorliegende Erfindung Leitungselemente, erhältlich nach einem solchen Verfahren.

Bei der Förderung von Erdöl aus dem Meer werden vermehrt Erdölvorkommen aus großen Tiefen gefördert. Das Erdöl solcher Förderstätten besitzt eine Temperatur von größer 100°C (bis 150°C). Dieses Öl wird mittels Pipelines von der Offshore Förderstätte auf das Festland gepumpt. Um den Wärmeverlust des Öls zu reduzieren, und dadurch das Ausfallen von Wachen aus dem Öl bei einem Förderstop zu vermeiden, ist die Pipeline mit einer Beschichtung aus, zum Beispiel Polyurethan, versehen.

So beschreibt WO 2005/056629 ein Verfahren zur Herstellung eines mit Glashohlkugeln gefülltem Polyurethan, um den Wärmeverlust einer Ölpipeline zu reduzieren. Dabei werden in WO 2005/056629 bevorzugt aromatische Isocyanate verwendet.

Durch die immer tieferen Bohrungen und die dadurch resultierende höhere Temperatur des Öls werden die Pipelinecoatings einer immer höheren Wärmebelastung ausgesetzt. Diese Wärmebelastung unter Wasser erfordert eine verbesserte Hydrolysestabilität des Coatings.

WO 2007/042411, WO 99/03922 und WO 2010/003788 offenbaren Beschichtungen auf Basis von Polyisocyanuraten. Diese haben den Vorteil einer besseren Temperaturstabilität. Die Hydrolysestabilität bei hohen Temperaturen ist allerdings gegenüber normalen Polyurethanen nur bedingt besser. Ferner haben die Systeme den Nachteil, besonders schnell zu reagieren, sodass eine Füllung von großen Volumen nur schwer zu realisieren ist. Ebenso sind die in den offenbarten Schriften verwendeten Polyisocyanurate aufgrund der großen Vernetzung durch den Isocyanuratring relativ spröde.

Aus P.A. Ykaman, Recent developments in aliphatic thermoplastic PU, Thermoplastische Elastomere III, Rapra Technology Limited, 1991 ist bekannt, dass Polyether-Polyurethan auf Basis aliphatischer Isocyanate gegenüber Polyurethan auf Basis aromatischer Isocyanate eine verbesserte Hydrolysestabilität aufweist. Ein Nachteil der aliphatischen Isocyanate ist allerdings deren hohe Flüchtigkeit. Durch die Toxizität beim Einatmen erfordert eine Verarbeitung aliphatischer Isocyanate aufwendige Vorsichtsmaßnahmen. Darüber hinaus sind aliphatische Isocyanate meist recht reaktionsträge.

Eine andere Möglichkeit das Problem der Giftigkeit von aliphatischen Isocyanaten wie HDI zu umgehen, ist der Einsatz von modifizierten aliphatischen Isocyanaten (Funktionalität >2), wie Isocyanuraten. Solch modifizierte, aliphatische Isocyanate mit einer Funktionalität größer 2 werden beispielsweise unter dem Handelsnamen Basonat® vertrieben. Diese polyfunktionenellen aliphatischen Isocyanate zeigen aufgrund des hohen Isocyanatanteils eine gute Reaktivität, allerdings sind die mechanischen Eigenschaften dieser Polyurethane unzureichend.

Aufgabe der vorliegenden Erfindung war es, ein Beschichtung aus Polyurethan für die bevorzugt maritime Anwendung in der Öl- und Gasindustrie zu entwickeln, welches eine verbesserte Hydrolysestabilität bei hohen Temperaturen aufweist und dennoch den hohen mechanischen Anforderungen in der Öl & Gasindustrie genügt.

Diese Aufgabe wird gelöst durch ein mit Polyurethan isoliertes Leitungselement, herstellbar durch ein Verfahren, bei dem man (a) eine Mischung aus aromatischem und aliphatischen Polyisocyanat mit (b) mindestens einer polymeren Verbindung mit mindestens zwei gegenüber Isocyanat reaktiven Wasserstoffatomen, (c) Kettenverlängerungsmittel mit einer Funktionalität von 2 bis 4 und einer Hydroxylzahl von 500 bis 2500 mg KOH/g, (d) Katalysator und (e) gegebenenfalls sonstigen Hilfsmitteln und/oder Zusatzstoffen, zu einer Reaktionsmischung vermischt, die Reaktionsmischung auf ein Leitungselement aufträgt und zu einer Polyurethanschicht ausreagieren lässt, wobei die Kettenverlängererkennzahl KV Isocyanate (a) sowie aller gegenüber Isocyanaten reaktiven Verbindungen der Komponenten (b) bis (e) gemäß der Formel (1)

$$KV = \frac{M(aromat.\ Isocyanat) \cdot NCO\ (aromat.\ Isocyanat) \cdot 56100}{M(Kettenverlängerer) \cdot OHZ(Kettenverlängerer) \cdot 4200} \cdot 100 \qquad (1)$$

1 bis 100 beträgt.

Dabei steht KV für die Kettenverlängererkennzahl, M(aromat. Isocyanat) für den Gewichtsanteil des aromatischen Isocyanats, angegebenen in Gew.-%, bezogen auf die Summe aus dem Gesamtgewicht an eingesetztem Isocyanat und gegenüber Isocyanaten reaktiven Verbindungen der Komponenten (b) bis (e), NCO(aromat. Isocyanat) für den NCO-Gehalt des aromatischen Isocyanats, angegeben in Gew.-% und M(Kettenverlängerer) für den Gewichtsanteil des Kettenverlängerers, angegebenen in Gew.-%, bezogen auf die Summe aus dem Gesamtgewicht an eingesetztem Isocyanat und der gegenüber Isocyanaten reaktiven Verbindungen in den Komponenten (b) bis (e).

Weiter wird diese Aufgabe gelöst durch ein mit Polyurethan isoliertes Leitungselement, herstellbar durch ein Verfahren, bei dem man (a) eine Mischung aus aromatischem und aliphatischen Polyisocyanat mit (b) mindestens einer polymeren Verbindung mit mindestens zwei gegenüber Isocyanat reaktiven Wasserstoffatomen, (c) Kettenverlängerungsmittel mit einer Funktionalität von 2 bis 4 und einer Hydroxylzahl von 500 bis 2500 mg KOH/g, (d) Katalysator und (e) gegebenenfalls sonstigen Hilfsmitteln und/oder Zusatzstoffen, zu einer Reaktionsmischung vermischt, die Reaktionsmischung in eine Form gibt und zu einem Formteil aushärtet, das Formteil entformt und auf ein Leitungselement aufbringt, wobei die Kettenverlängererkennzahl KV der Komponenten (a) bis (c) gemäß der Formel (1) 1 bis 100 beträgt.

Als mit Polyurethan beschichtete Leitungselemente im Sinn der vorliegenden Erfindung sollen nicht nur klassische beschichtete Rohrbeschichtungen sondern auch mit Polyurethan beschichtete Schweißbereiche von Rohrleitungen, sogenannte "Field Joints", und mit Polyurethan beschichtete Gegenstände, die mit Rohrleitungen in Verbindung stehen, wie Muffen, Borlochanschlüsse, Eruptionskreuze, Rohrsammler, Pumpen und Bojen verstanden werden. Auch sollen Leitungselemente mit Polyurethan beschichtete Kabel, vorzugsweise Off-Shore-Kabel umfassen. Weiter schließt im Sinn der vorliegenden Erfindung ein mit Polyurethan beschichtetes Leitungselement auch Rohre mit ein, die Ummantelungen zur Verstärkung, wie Bend Stiffener oder Bend Restriktoren aufweisen, wobei die Bend Stiffener und die Bend Restriktoren der Polyurethanbeschichtung entsprechen. Vorzugsweise ist unter dem erfindungsgemäßen mit Polyurethan beschichteten Leitungselement ein Leitungselement einer Off-Shore Pipeline oder ein Off Shore Kabel zu verstehen. Dabei bedeutet "Off Shore", dass diese Gegenstände bei üblicher Verwendung mit Meerwasser in Berührung kommen. Besonders bevorzugt ist das erfindungsgemäßem mit Polyurethan beschichtete Leitungselement ein mit Polyurethan beschichtetes Rohr einer Off-Shore Pipeline, ein Field Joint einer Off Shore Pipeline oder ein Eruptionskreuz (auch als X-Mas Tree bezeichnet) einer Off Shore Pipeline, insbesondere einer Off Shore Pipeline zur Förderung von Rohöl.

Die Beschichtung der Teile kann direkt oder Indirekt erfolgen, wobei bei einer indirekten Beschichtung das Polyurethan separat hergestellt wird und dann durch z.B. Verschraubungen auf das zu beschichtende Element aufgebracht wird. Bevorzugt wird Polyurethan direkt auf die Oberfläche des zu beschichtenden Materials gegossen. Im Allgemeinen bestehen die zu beschichtenden Oberflächen aus Metallen, wie Stahl, Eisen, Kupfer oder Aluminium oder aus Kunststoffen, wie z.B. Polypropylen oder Epoxydharzen. Zur besseren Haftung können noch gegebenenfalls übliche Haftvermittler, wie interne Haftvermittler, die den Polyurethankomponenten zugegeben werden, externe Haftvermittler, die direkt auf die zu beschichtende Fläche gegeben werden und/oder physikalische Haftvermitter verwendet werden. Auch kann die zu beschichtende Oberfläche, beispielsweise durch beflammen oder Plasmabehandlung, vorbehandelt werden.

Als gegenüber Isocyanaten reaktiven Verbindungen der Komponenten (b) bis (e) werden alle Verbindungen dieser Komponenten verstanden, die gegenüber Isocyanat reaktive Wasserstoffgruppen aufweisen. Werden beispielsweise Katalysatoren eingesetzt, die OH-Gruppen aufweisen, sind diese zu berücksichtigen. Ebenso sind beispielsweise OH-Gruppenhaltige Suspensions- oder Lösemittel, die beispielsweise als Suspensions- oder Lösemittel für eine der Einsatzstoffe verwendet werden, wie Suspensionen in Ricinusöl zu berücksichtigen.

Als Isocyanate wird eine Mischung (a), enthaltend aliphatische und aromatische Isocyanate eingesetzt, die jeweils auch modifiziert sein können.

Als aliphatische und aromatische Isocyanate werden dabei vorzugsweise die zur Herstellung von Polyurethan üblicherweise eingesetzten aliphatischen oder aromatischen Isocyanate eingesetzt. Diese können unmodifiziert oder modifiziert sein, wobei unter einer Modifizierung die Umsetzung dieser Isocyanate zum Isocyanatterminierten Polyisocyanatprepolymer und/oder die Umsetzung zu Biuret-, Allophanat-, Uretdion- Carbodiimid- oder Isocyanurat-haltigen Isocyanaten verstanden wird. Dabei können diese Isocyanate einzeln oder in Mischungen eingesetzt werden. Vorzugsweise enthält das aliphatische Isocyanat weniger als 15 Gew.-%, besonders bevorzugt weniger als 7.5 Gew.-% und insbesondere weniger als 1 Gew.-%, bezogen auf das Gesamtgewicht des aliphatischen Isocyanats, an monomerem aliphatischem Isocyanat. Die verbleibende Menge aliphatisches Isocyanat liegt dabei als modifiziertes aliphatisches Isocyanat vor.

Beispiele für unmodifizierte aromatische Isocyanate sind 4,4'-Methandiphenyldiisocyanat, 2,4'-Methandiphenyldiisocyanat, die Mischungen aus monomeren Methandiphenyldiisocyanaten und höherkernigen Homologen des Methandiphenyldiisocyanats (Polymer-MDI), 2,4- oder 2,6-Toluylendiisocyanat (TDI). Beispiele für unmodifizierte aliphatische Isocyanate sind Tetramethylendiisocyanat, Hexamethylendiisocyanat (HDI) Isophorondiisocyanat (IPDI) oder 4,4'-Diisocyanatodicyclohexylmethn (H12MDI).

Polyisocyanatprepolymere sind erhältlich, indem vorstehend beschriebene Polyisocyanate im Überschuss, beispielsweise bei Temperaturen von 30 bis 100 °C, bevorzugt bei etwa 80 °C, mit Polyolen (a-2), zum Prepolymer umgesetzt werden. Vorzugsweise wird zur Herstellung der erfindungsgemäßen Prepolymere 4,4'-MDI zusammen mit uretoniminmodifiziertem MDI und handelsüblichen Polyolen auf Basis von Polyestern, beispielsweise ausgehend von Adipinsäure, oder Polyethern, beispielsweise ausgehend von Ethylenoxid und/oder Propylenoxid, verwendet. Polyole sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole die unter b) beschriebenen polymeren Verbindungen mit gegenüber Isocyanate reaktiven Wasserstoffatomen eingesetzt. Besonders bevorzugt werden als Polyole Polyetherole eingesetzt.

Gegebenenfalls werden den genannten Polyolen bei der Herstellung der Isocyanatprepolymere übliche Kettenverlängerer oder Vernetzungsmittel zugegeben. Solche Substanzen sind im Folgenden unter c) beschrieben. Besonders bevorzugt wird als Kettenverlängerer 1,4-Butandiol, Dipropylenglycol und/oder Tripropylenglycol eingesetzt. Vorzugsweise wird dabei das Verhältnis von organischen Polyisocyanaten zu Polyolen und Kettenverlängerern so gewählt, dass das Isocyanatprepolymer einen NCO-Gehalt von 10 bis 28 %, besonders bevorzugt von 14 bis 24 % aufweist.

In einer bevorzugten Ausführungsform sind die aromatischen Isocyanate difunktionell. In einer weiteren bevorzugten Ausführungsform enthält das aromatische Isocyanat enthält Diphenylmethandiisocyanat (MDI) oder Gemische aus Diphenylmethandiisocyanat und Polyphenylenpolymethylenpolyisocyanaten (Roh-MDI) und gegebenenfalls Prepolymeren auf Basis von MDI.

Das aliphatische Isocyanat ist vorzugsweise ein aliphatisches Isocyanat, das ausgehend von Hexamethylendiisocyanat, Isophorondiisocyanat H12 Diphenylmethandiisocyanat oder Mischungen daraus durch Modifizierung erhalten wurde. Vorzugsweise handelt es sich um eine Modifizierung zu Isocyanuaten, Allophanaten oder Biureten. Dabei beträgt der Anteil an monomerem aliphatischen Isocyanat vorzugsweise weniger als 15 Gew.-%, besonders bevorzugt weniger als 7.5 Gew.-% und insbesondere weniger als 1 Gew.-%, bezogen auf das Gesamtgewicht des aliphatischen Isocyanats. Dabei ist das Gewichtsverhältnis von aromatischen Isocyanat zu aliphatischen Isocyanat vorzugsweise 1 zu 99 bis 99 zu 1 Gewichtsteile, bevorzugt 10 zu 90 bis 90 zu 10 Gewichtsteile besonders bevorzugt 20 zu 80 bis 80 zu 20 Gewichtsteile und insbesondere 70 zu 30 bis 30 zu 70 Gewichtsteile. Werden Mischungen aliphatischer Isocyanate eingesetzt, wird zur Berechnung der Kettenverlängererkennzahl KV gemäß Formel 1 der Isocyanatgehalt der Mischung verwendet.

Polymere Verbindungen mit mindestens zwei gegenüber Isocyanaten reaktiven Wasserstoffatomen (b) weisen ein Molekulargewicht von mindestens 450 g/mol auf. Dabei können alle zur Polyurethanherstellung bekannten Verbindungen mit mindestens zwei reaktiven Wasserstoffatomen und einem Molekulargewicht von mindestens 450 g/mol eingesetzt werden. Diese weisen beispielsweise eine Funktionalität von 2 bis 8 und einem Molekulargewicht von 450 bis 12000 auf. So können beispielsweise Polyetherpolyamine und/oder Polyole, ausgewählt aus der Gruppe der Polyetherpolyole, Polyesterpolyole oder Mischungen daraus, verwendet werden.

Die bevorzugt zur Anwendung kommenden Polyole sind Polyetherole, Polycarbonatpolyole und/oder Polyesterole mit Molekulargewichten zwischen 450 und 12000, bevorzugt 500 bis 6000, insbesondere 500 bis weniger als 3000, und bevorzugt einer mittleren Funktionalität von 2 bis 6, bevorzugt 2 bis 4. Vorzugsweise werden als Polyole ausschließlich Polyetherole und Polycarbonatpolyole eingesetzt.

Die erfindungsgemäß verwendbaren Polyetherole, werden nach bekannten Verfahren hergestellt. Beispielsweise können sie durch anionische Polymerisation mit Alkalihydroxiden, wie z. B. Natrium- oder Kalium- hydroxid oder Alkalialkoholaten, wie z. B. Natriummethylat, Natrium- oder Kaliumethylat oder Kaliumisopropylat als Katalysatoren und unter Zusatz mindestens eines Startermoleküls, das 2 bis 8, vorzugsweise 2 bis 6, reaktive Wasserstoffatome aufweist, oder durch kationische Polymerisation mit Lewissäuren, wie Antimonpentachlorid, Borfluorid-Etherat u. a., oder Bleicherde als Katalysatoren hergestellt werden. Ebenso können Polyetherpolyole durch Doppelmetallcyanidkatalyse aus einem oder mehreren Alkylenoxiden mit 2 bis 4 Kohlenstoffatomen im Alkylenrest hergestellt werden. Auch tertiäre Amine können als Katalysator eingesetzt werden, beispielsweise Triethylamin, Tributylamin, Trimethylamin, Dimethylethanolamin, Imidazol oder Dimethylcyclohexylamin. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin (TDA) und 4,4'-, 2,4'- und 2,2'-Diaminodiphenylmethan (MDA) und polymerisches MDA. Als Startermoleküle kommen ferner in Betracht: Alkanolamine, wie z. B. Ethanolamin, N-Methyl- und N-Ethylethanolamin, Dialkanolamine, wie z. B. Diethanolamin, N-Methyl- und N-Ethyldiethanolamin, Trialkanolamine, wie z. B. Triethanolamin, und Ammoniak. Vorzugsweise verwendet werden mehrwertige Alkohole, wie Ethandiol, 1,2- und 2,3-Propandiol, Diethylenglykol, Dipropylenglykol, 1,4-Butandiol, 1,6-Hexandiol, Glycerin, Trimethylolpropan; Pentaerythrit, Sorbitol und Saccharose, und Mischungen davon. Die Polyetherpolyole können einzeln oder in Form von Mischungen verwendet werden.

Vorzugsweise enthalten die polymeren Verbindungen mit mindestens zwei gegenüber Isocyanaten reaktiven Wasserstoffatomen (b) Polyetherpolyole auf Basis eines difunktionellen Startermoleküls (b1) und Polyetherpolyole auf Basis eines trifunktionellen Startermoleküls (b2). Als difunktionelle Startermoleküle zu Herstellung des Bestandteils (b1) kann beispielsweise Ethandiol, Propandiol-1,2 und -1,3, Diethylenglykol, Dipropylenglykol, Butandiol-1,4 oder Hexandiol-1,6 oder Gemische davon verwendet werden. Bevorzugt wird Diethylenglykol oder Dipropylenglykol verwendet.

Im Allgemeinen wird die Alkoxylierung des Bestandteils (b1) derart ausgeführt, dass der Bestandteil (b1) ein zahlenmittleres Molekulargewicht von 500 g/mol bis 3500 g/mol, bevorzugt von 600 bis 2500 g/mol, besonders bevorzugt von 800 bis 1500 g/mol aufweist.

Als trifunktionelle Startermoleküle zu Herstellung des Bestandteils (b2) werden bevorzugt Glycerin, Trimethylolpropan oder Gemische davon verwendet.

Im Allgemeinen wird die Alkoxylierung des Bestandteils (b2) derart ausgeführt, dass der Bestandteil (b2) ein zahlenmittleres Molekulargewicht von 500 g/mol bis 8000 g/mol, bevorzugt von 1000 bis 6000 g/mol aufweist.

In einer bevorzugten Ausführungsform umfasst der Polyolbestandteil (b2) die Bestandteile (b2-1) und (b2-2), wobei es sich jeweils um ein Polyetherpolyol auf Basis eines trifunktionellen Startermoleküls handelt, jedoch mit unterschiedlichem Molekulargewicht.

Der Bestandteil (b2-1) umfasst ein Polyetherpolyol auf Basis eines trifunktionellen Startermoleküls mit einem zahlenmittleren Molekulargewicht von 500 g/mol bis 3500 g/mol, bevorzugt von 1000 bis 3200 g/mol, besonders bevorzugt von 1500 bis 3000 g/mol, insbesondere von 1800 bis 2900 g/mol.

Der Bestandteil (b2-2) ist üblicherweise ein Polyetherpolyol auf Basis eines trifunktionellen Startermoleküls mit einem zahlenmittleren Molekulargewicht von mehr als 3500 g/mol bis 8000 g/mol sein, bevorzugt von 3700 bis 7000 g/mol, besonders bevorzugt von 4000 g/mol bis 6000 g/mol.

In einer weiteren Ausführungsform enthalten die polymeren Verbindungen mit mindestens zwei gegenüber Isocyanat reaktiven Wasserstoffatomen als zusätzlichen Bestandteil b3) ein Polyetherpolyol auf Basis eines vier- oder höherfunktionellen Startermoleküls. Bevorzugt verwendet werden 4- bis 6-funktionelle Startermoleküle. Beispiele für geeignete Startermoleküle sind Pentaerythrit, Sorbitol und Saccharose.

Als Kettenverlängerungsmittel c) können Substanzen mit einem Molekulargewicht von kleiner 450 g/mol, besonders bevorzugt von 60 bis 400 g/mol und einer Funktionalität von vorzugsweise 2 bis 4 eingesetzt werden. Vorzugsweise weisen Kettenverlängerer im Sinn der vorliegenden Erfindung Funktionalitäten von 2 bis 4 und OH-Zahlen von 500 bis 2500, bevorzugt 500 bis 2000 mg KOH/g und besonders bevorzugt 500 bis 1850 mg KOH/g auf. Diese können einzeln oder bevorzugt in Form von Mischungen eingesetzt werden. Vorzugsweise werden Diole und/oder Triole mit Molekulargewichten kleiner als 450, besonders bevorzugt von 60 bis 400 und insbesondere 60 bis 350 eingesetzt. In Betracht kommen beispielsweise aliphatische, cycloaliphatische und/oder araliphatische oder aromatische Diole mit 2 bis 14, vorzugsweise 2 bis 10 Kohlenstoffatomen, wie Ethylenglykol, 1,3-Propandiol, 1,4-Butandiol, 1,6-Hexandiol, 1,10-Decandiol und Bis-(2-hydroxyethyl)-hydrochinon, 1,2-, 1,3-, 1,4-Dihydroxycyclohexan, Diethylenglykol, Dipropylenglykol, Tripropylenglykol, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (c) niedermolekulare hydroxylgruppenhaltige Polyalkylenoxide auf Basis Ethylen- und/oder 1,2-Propylenoxid, besonders bevorzugt Ethylen und trifunktionellen Startern, insbesondere Glycerin, Butandiol und Dipropylenglykol eingesetzt. Werden Mischungen von zwei oder mehr Kettenverlängerern eingesetzt, wird zur Berechnung der Kettenverlängererkennzahl KV gemäß Formel 1 die OH-Zahl der Mischung eingesetzt.

Die erfindungsgemäß verwendbaren Polycarbonatpolyole, werden nach bekannten Verfahren, beispielsweise wie in JP1998000267980 und US62655524 beschrieben, hergestellt. Sie werden z.B. durch Ester-Austauschreaktion mit einem aliphatischen Diol und Dimethylcarbonat erhalten. Vorzugsweise weisen Polycarbonatpolyole im Sinn der Erfindung zahlenmittlere Molekulargewichte von 500 bis 2000 g/mol, besonders bevorzugt 500 bis 1000 g/mol und Funktionalitäten von vorzugsweise 2 bis 6 und besonders bevorzugt 2 bis 3 auf. Als Polycarbonatpolyole können beispielsweise kommerziell erhältliche Polycarbonatpolyole, wie Eternacoll® UH 100, UH 50 oder PH 200 der Firma UBE Chemicals eingesetzt werden.

Vorzugsweise werden die Komponenten b1), b2) und c) und gegebenenfalls b3) in einer Menge eingesetzt, dass die Viskosität einer Mischung dieser Substanzen bei 25 °C, gemessen nach DIN 53019, weniger als 1000 mPas, bevorzugt weniger als 500 mPas bei 25°C und besonders bevorzugt von 200 bis 400 mPas aufweist.

Dabei enthält die Mischung aus polymeren Verbindungen mit mindestens zwei gegenüber Isocyanat reaktiven Wasserstoffatomen (b) und Kettenverlängerungsmittel (c) vorzugsweise von 20 bis 60 Gew.-%, besonders bevorzugt von 30 bis 50 Gew.-%, der Komponente b1), von 20 bis 60 Gew.-%, besonders bevorzugt von 30 bis 50 Gew.-% der Komponente b2) und 5 bis 25 Gew.-%, mehr bevorzugt von 7 bis 20 Gew.-% und besonders bevorzugt von 9 bis 18 Gew.-%, Kettenverlängerungsmittel und/oder Vernetzungsmittel c), jeweils bezogen auf das Gesamtgewicht der Komponenten (b) und (c).

Sofern Bestandteil b3) verwendet wird, beträgt im Allgemeinen die eingesetzte Menge 0,1 bis 15 Gew.-%, bevorzugt 1 bis 10 Gew.-%, besonders bevorzugt 2 bis 7 Gew.-%, bezogen auf das Gesamtgewicht der Komponenten (b) und (c). Bevorzugt enthält die Komponente b) neben den Komponenten b1), b2) und b3) keine weiteren polymeren Verbindungen mit gegenüber Isocyanat reaktiven Wasserstoffatomen.

Als Katalysatoren (d) zur Herstellung der Polyurethanformkörper werden bevorzugt Verbindungen verwendet, welche die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. Genannt seien beispielsweise Amidine, wie 2,3-Di-methyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente (b).

Gegebenenfalls können der der Mischung der Komponenten a) bis d) Hilfs- und Zusatzstoffe (e) zugesetzt werden. Hier seien beispielsweise oberflächenaktive Substanzen, Farbstoffe, Pigmente, Hydrolyseschutzstabilisatoren, Oxidationsschutzmittel, UV-Schutzmittel, Wasserfänger, wie z.B. Zeolithe, Latentwärmespeicher und Mikrohohlkugeln genannt.

Unter dem Begriff Mikrohohlkugeln sind im Rahmen dieser Erfindung organische und mineralische Hohlkugeln zu verstehen. Als organische Hohlkugeln können beispielsweise Kunststoffhohlkugeln, z.B. aus Polyethylen, Polypropylen, Polyurethan, Polystyrol oder einem Gemisch daraus, eingesetzt werden. Die mineralischen Hohlkugeln können beispielsweise Ton, Aluminiumsilikat, Glas oder Gemische daraus enthalten.

Die Hohlkugeln können im Inneren ein Vakuum oder Teilvakuum aufweisen oder mit Luft, Inertgasen, beispielsweise Stickstoff, Helium oder Argon, oder Reaktivgasen, beispielsweise Sauerstoff, gefüllt sein.

Üblicherweise weisen die organischen oder mineralischen Hohlkugeln einen Durchmesser von 1 bis 1000 $\mu$m, bevorzugt von 5 bis 200 $\mu$m auf. Üblicherweise weisen die organischen oder mineralischen Hohlkugeln eine Schüttdichte von 0,1 bis 0,4 g/cm$^3$ auf. Sie besitzen im Allgemeinen eine Wärmeleitfähigkeit von 0,03 bis 0,12 W/mK.

Bevorzugt werden als Mikrohohlkugeln Mikroglashohlkugeln verwendet. In einer besonders bevorzugten Ausführungsform weisen die Mikroglashohlkugeln eine hydrostatische Druckfestigkeit von mindestens 20 bar auf. Beispielsweise können als Mikrohohlglaskugeln 3M - Scotchlite® Glass Bubbles verwendet werden. Vorzugsweise enthält die Mischung der Komponenten a) bis f) keine Mikroholglaskugeln.

Als Latentwärmespeicher können verkapselte und nicht verkapselte, lipophile Substanzen mit einem fest/flüssig-Übergang oberhalb von 20 °C, meist Wachse, eingesetzt werden. Diese können in einem Polymer verkapselt vorliegen. Bei laufender Rohölförderung nehmen die Latentwärmespeicher Wärme des warmen Rohöls auf und schmelzen. Bei einem kurzzeitigen Produktionsstopp kühlt die Isolierschicht von außen her langsam ab, wobei sich auch die lipophile Füllung der Latentwärmespeicher abkühlt, verfestigt und dabei die aufgenommenen Wärme wieder an das Rohöl abgibt. Ähnliche Lösungen sind in DE 10256550, WO 2004003424, US 6,000,438, WO 2002016733 oder CN 101545565 beschrieben.

Des Weiteren können als Hilfs- und Zusatzstoffe (e) thixotropierende Additive, wie beispielsweise Laromin® C 260 (Di-methyl-methylen-Bis-Cyclohexylamin) enthalten sein. Im Allgemeinen liegt die eingesetzte Menge dieser thixotropierenden Additive zwischen 0,1 und 3 Gewichtsteilen, bezogen auf 100 Gewichtsteile der Komponente (b).

Ferner ist es möglich, als Hilfs- und Zusatzstoffe (e) aus dem Stand der Technik bekannte Treibmittel zuzusetzen. Es ist jedoch bevorzugt, dass kein Treibmittel eingesetzt wird, insbesondere, dass kein Wasser zugesetzt wird. Somit enthalten die Komponenten a) und b) besonders bevorzugt kein Treibmittel, abgesehen von Restwasser, welches in technisch hergestellten Polyolen enthalten ist.

Ferner ist es besonders bevorzugt, wenn der Restwassergehalt durch Zusatz von Wasserfängern reduziert wird. Als Wasserfänger sind beispielsweise Zeolithe geeignet. Die Wasserfänger werden beispielsweise in einer Menge von 0,1 bis 10 Gew.-%, bezogen auf das Gesamtgewicht der Polyolkomponente b), eingesetzt.

Sofern wie oben beschrieben keine Treibmittel eingesetzt werden, erhält man als erfindungsgemäßes Produkt kompakte Polyurethane und keine Polyurethanschaumstoffe.

Zur Herstellung der erfindungsgemäßen Polyurethanreaktionsmischung werden die organischen Polyisocyanate a) und die Komponenten, die Verbindungen gegenüber Isocyanaten reaktive Wasserstoffatome enthalten, in solchen Mengen zur Umsetzung gebracht, dass das Äquivalenzverhältnis von NCO-Gruppen der Isocyanatgruppen zur Summe der reaktiven Wasserstoffatome 1 : 0,5 bis 1 : 3,50 (entsprechend einem Isocyanatindex von 50 bis 350), vorzugsweise 1 : 0,85 bis 1 : 1,30 und besonders bevorzugt von 1 : 0,9 bis 1 : 1,15 beträgt.

Die Ausgangskomponenten werden üblicherweise bei einer Temperatur von 0 °C bis 100 °C, bevorzugt 15 °C bis 60 °C gemischt und zur Reaktion gebracht. Die Vermischung kann mit den üblichen PUR-Verarbeitungsmaschinen erfolgen. In einer bevorzugten Ausführungsform erfolgt die Vermischung durch Niederdruckmaschinen oder Hochdruckmaschinen. Dabei können die zu beschichtenden Teile entweder über das Formgießen oder sprühen hergestellt werden oder mittels eines Rotationsverfahrens. Bevorzugt wird jedoch das Formgießen verwendet. Dabei wird die Reaktionsmischung der Komponenten (a), (b), (c), (d), (e) und ggf. (f) in eine Form gegossen, welche das zu Beschichtende Element, zum Beispiel das Rohr enthält. Nach dem Aushärten des Polyurethans wird die Form entfernt. Das Material kann direkt verwendet werden. In einer besonderen Ausführungsform der Erfindung wird das beschichtete Teil noch einer Wärmebehandlung unterzogen.

Beim Rotationsgießverfahren erfolgt das Aufbringen der Reaktionsmischung durch Aufgießen auf das sich drehende Element, zum Beispiel das Pipelinerohr. Dabei wird die Reaktionsmischung mittels herkömmlicher Mischvorrichtungen, z.B. Niederdruckmischkopf, erhalten. In einer besonderen Ausführungsform erfolgt Austrag über eine Breitschlitzdüse. Der Vorschub des Mischkopfs oder des Rohres wird im Allgemeinen so eingestellt, dass bei konstantem Ausstoß die gewünschte Dicke der Polyurethanschicht erreicht wird. Hierzu kann die Reaktionsmischung bevorzugt thixotropierende Additive enthalten, wodurch ein Herabtropfen des Reaktionsgemisches vom rotierenden Element verhindert wird.

Alternativ kann die Beschichtung indirekt erfolgen. Dazu wird die Reaktionsmischung der Komponenten (a), (b), (c), (d), (e) und ggf. (f) in eine Form gegossen und anschließend entformt. Das so hergestellte Formteil wir dann auf das zu beschichtende Rohrelement aufgebracht, beispielsweise durch verschrauben oder verkleben.

Die Dicke der Polyurethanschicht beträgt vorzugsweise 5 bis 200 mm, besonders bevorzugt 10 bis 150 mm und insbesondere 20 bis 100 mm. Gegebenenfalls kann auf die Polyurethanschicht eine oder mehrere weitere Schichten, z.B. eine isolierende Schicht und/oder eine Deckschicht aus einem Thermoplasten aufgebracht werden. Vorzugsweise werden auf die Polyurethanschicht keine weiteren Schichten aufgebracht.

Die erfindungsgemäße Polyurethanbeschichtung zeichnet sich durch hervorragende mechanische Eigenschaften, wie Bruchdehnung und Zugfestigkeit sowie eine hervorragende Hydrolysestabilität aus. Weiter kann aliphatisches Isocyanat ersetzt werden, wodurch ein preiswerteres Produkt mit verbesserten mechanischen Eigenschaften erhalten wird.

Die Erfindung soll durch nachstehende Beispiele veranschaulicht werden.

Ausgangsmaterialien

| | |
|---|---|
| Polyol 1: | Polyetherol auf Basis von Glycerin, Propylenoxid, Ethylenoxid hergestellt über KOH-Katalyse mit einen Ethylenoxid-Endcap und einer OH-Zahl von 28 mg KOH/g und einer Viskosität von 1100 mPas bei 25°C |
| Polyol 2: | Polyetherol auf Basis von Propylenglycol und Propylenoxid hergestellt über DMC-Katalyse und einer OH-Zahl von 28 mg KOH/g und einer Viskosität von 900 mPas bei 25°C |
| KV 1 : | 1,4 - Butandiol mit einer OH-Zahl von 1245 mg KOH/g |
| KV 2: | Lupranol® 3902 der Firma BASF Polyurethanes mit einer OH-Zahl von 860 mg KOH/g |
| Kat 1 : | Dabco 25%ig gelöst in 1,4-Butandiol |

(fortgesetzt)

| Kat 2 : | Fomrez UL 28 |
|---|---|
| ZM 1 : | 50%ige Zeolithepaste in Rizinusöl mit einer OH-Zahl von 80 mg KOH/g |
| ZM 2 : | Zeolithepulver |
| ZM 3 : | Entschäumer |
| ISO 1: | aliphatisches Isocyanat Basonat HI 100 der Firma BASF mit einen NCO-Gehalt von 22% |
| ISO 2: | aliphatisches Isocyanat Basonat HA 200 der Firma BASF mit einem NCO-Gehalt von 20% |
| ISO 3: | aromatisches Isocyanat Lupranat M 20 S der Firma BASF Polyurethanes GmbH mit einem NCO-Gehalt von 31,5% |
| ISO 4: | aromatisches Isocyanat Lupranat MP 102 der Firma BASF Polyurethanes GmbH mit einem NCO-Gehalt von 22,9% |
| ISO 5: | aromatische Isocyanatmischung auf Basis von Lupranat M 20 S und Lupranat MP102 mit einem NCO-Gehalt von 25,5% |

Die in den Beispielen V1-V3 und B1-B3 wird der Einfluss der KV-Kennzahl auf die mechanischen Eigenschaften und Hydrolysestabilität erläutert. Dabei ist die Zusammensetzung der in den Beispielen aufgeführten Isocyanatmischungen als eine Mischung von ISO 1 : ISO 5 in verschiedenen Gewichtsverhältnissen zu sehen. Die Polyol- und die Isocyanatmischungen wurden gemäß der Tabelle 1 hergestellt und mittels Vakuum entgast. Nachdem die Materialien entgast waren, wurden 100g der Polyolmischung mit der entsprechenden Masse an Isocyanat mittels eines Speedmixer™ vermischt und Prüfplatten mit einer Schichtdicke von 2 mm hergestellt. Die Materialien wurden nach dem Aushärten noch 2 Stunden bei 80°C getempert.

| | V1 | B1 | B2 | B3 | V2 | V3 |
|---|---|---|---|---|---|---|
| Polyol 1 | 85,32 | 85,09 | 84,82 | 85,48 | 85,48 | 85,48 |
| KV 1 | 13,00 | 13,00 | 13,00 | 13,00 | 13,00 | 13,00 |
| ZM 1 | 1,50 | 1,50 | 1,50 | 1,50 | 1,50 | 1,50 |
| Kat 1 | 0,18 | 0,18 | 0,18 | 0,00 | 0,00 | 0,00 |
| Kat 2 | | | | 0,02 | 0,02 | 0,02 |
| ISO | | | | | | |
| ISO 1 | 0,00 | 20,00 | 40,00 | 60,00 | 80,00 | 100,00 |
| ISO 5 | 100,00 | 80,00 | 60,00 | 40,00 | 20,00 | 0,00 |
| NCO-Gehalt Iso-Mischung | 25,5 | 24,8 | 24,1 | 23,4 | 22,7 | 22,0 |
| KV-Kennzahl | 117 | 96 | 74 | 51 | 26 | 0 |
| Index | 100 | 100 | 100 | 100 | 100 | 100 |
| Mixing ratio 100: | 56,1 | 57,7 | 59,3 | 60,8 | 62,6 | 64,6 |

Die Berechnung der KV-Kennzahl soll hier nun exemplarisch an B3 nachvollzogen werden:

$$KV - Kennzahl = \frac{(0,4 \cdot 60,8) \cdot 25,5 \cdot 56100}{13 \cdot 1245 \cdot 4200} \cdot 100 = 51$$

Die Proben wurden anschließend für mehrere Stunden in Wasserdampf bei 130°C gelagert. Nach der entsprechenden Lagerung wurden die Proben 12 Stunden bei 60 °C getrocknet und anschließend noch 24 Stunden unter Normklima konditioniert und die verbleibenden mechanischen Eigenschaften getestet.

| | V1 | B1 | B2 | B3 | V2 | V3 |
|---|---|---|---|---|---|---|
| Original | | | | | | |
| Zugfestigkeit [Mpa] | 14,9 | 12 | 8 | 8,1 | 2,6 | 1,4 |
| Bruchdehnung [%] | 196 | 134 | 92 | 97 | 60 | 59 |
| Hydrolyse 5 h bei 130°C | | | | | | |
| Zugfestigkeit [Mpa] | 16,2 | 14,1 | 7,8 | 8,7 | 2,3 | 1,4 |
| Bruchdehnung [%] 10 h bei 130°C | 256 | 195 | 114 | 101 | 56 | 56 |

(fortgesetzt)

|  | V1 | B1 | B2 | B3 | V2 | V3 |
|---|---|---|---|---|---|---|
| Zugfestigkeit [Mpa] | 14,2 | 12,3 | 8,8 | 8,3 | 1,8 | 1 |
| Bruchdehnung [%] 15 h bei 130°C | 261 | 185 | 137 | 105 | 47 | 35 |
| Zugfestigkeit [Mpa] | 11,6 | 8,8 | 7,0 | 7,9 | 3,5 | 0,9 |
| Bruchdehnung [%] 30 h bei 130°C | 241 | 154 | 117 | 105 | 85 | 50 |
| Zugfestigkeit [Mpa] | n.m | 4,8 | 7,2 | 7,8 | 2,4 | 1,2 |
| Bruchdehnung [%] | n.m. | 220 | 140 | 110 | 70 | 47 |

n.m: nicht messbar; Probe war nach Lagerung zerstört.

Analog zu den Beispielen V1-V3 und B1-B3 wurden die nachfolgenden Beispiele V4, B4 und B5 hergestellt und einen Hydrolysetest bei 130°C unterzogen.

|  | V4 | B4 | B5 |
|---|---|---|---|
| Polyol 2 | 45,95 | 46,615 | 46,615 |
| KV 1 | 5,00 | 5,00 | 5,00 |
| KV 2 | 45,95 | 46,615 | 46,615 |
| ZM 1 | 2,50 |  |  |
| ZM 2 |  | 1,50 | 1,50 |
| ZM 3 | 0,50 | 0,50 | 0,50 |
| Kat 2 | 0,10 | 0,02 | 0,02 |
| ISO |  |  |  |
| ISO 2 | 100 | 66,7 | 66,7 |
| ISO 3 |  | 33,3 |  |
| ISO 4 |  |  | 33,3 |
| NCO-Gehalt Iso-Mischung | 20,0 | 23,8 | 21,0 |
| KV-Kennzahl | 0 | 45 | 37 |
| Index | 100 | 100 | 100 |
| Mixing ratio 100: | 178,4 | 149,7 | 170,1 |
|  | V4 | B4 | B5 |
| Original |  |  |  |
| Zugfestigkeit [Mpa] | 24,5 | 36,9 | 37,1 |
| Bruchdehnung [%] Hydrolysis 5 h bei 130°C | 36 | 30 | 74 |
| Zugfestigkeit [Mpa] | 19,6 | 37,3 | 37,9 |
| Bruchdehnung [%] 10 h bei 130°C | 30 | 27 | 90 |
| Zugfestigkeit [Mpa] | 22,6 | 37,6 | 37,9 |
| Bruchdehnung [%] 15 h bei 130°C | 25 | 23 | 92 |
| Zugfestigkeit [Mpa] | 22,7 | 36,8 | 38,0 |
| Bruchdehnung [%] | 28 | 23 | 91 |

Wie aus den Beispielen ersichtlich ist, führt die Verwendung einer KV-Kennzahl von kleiner 100, bevorzugt einer KV-Kennzahl von 25 bis 95, besonders bevorzugt von 35 bis 85, zu einer verbesserten Hydrolysestabilität bei guten mechanischen Eigenschaften.

**Patentansprüche**

1.  Verfahren zur Herstellung von mit Polyurethan beschichteten Leitungselementen bei dem man

    a) eine Mischung aus aromatischem und aliphatischen Polyisocyanat mit

b) mindestens einer polymeren Verbindung mit mindestens zwei gegenüber Isocyanat reaktiven Wasserstoffatomen,
c) Kettenverlängerungsmittel,
d) Katalysator und
e) gegebenenfalls sonstigen Hilfsmitteln und/oder Zusatzstoffen,
zu einer Reaktionsmischung vermischt, die Reaktionsmischung auf ein Leitungselement aufträgt und zu einer Polyurethanschicht ausreagieren lässt, wobei die Kettenverlängererkennzahl KV der Isocyanate (a) sowie aller gegenüber Isocyanaten reaktiven Verbindungen der Komponenten (b) bis (e) gemäß der Formel (1)

$$KV = \frac{M(aromat.\ Isocyanat) \cdot NCO\ (aromat.\ Isocyanat) \cdot 56100}{M(Kettenverlängerer) \cdot OHZ(Kettenverlängerer) \cdot 4200} \cdot 100 \qquad (1)$$

1 bis 100 beträgt, wobei M(aromat. Isocyanat) für den Gewichtsanteil des aromatischen Isocyanats, angegebenen in Gew.-%, bezogen auf die Summe aus dem Gesamtgewicht an eingesetztem Isocyanat und gegenüber Isocyanaten reaktiven Verbindungen der Komponenten (b) bis (e), steht, NCO(aromat. Isocyanat) für den NCO-Gehalt des aromatischen Isocyanats, angegeben in Gew.-%, steht, und M(Kettenverlängerer) für den Gewichtsanteil des Kettenverlängerers, angegebenen in Gew.-%, bezogen auf die Summe aus dem Gesamtgewicht an eingesetztem Isocyanat und der gegenüber Isocyanaten reaktiven Verbindungen in den Komponenten (b) bis (e), steht.

2. Verfahren zur Herstellung von Polyurethan beschichteten Leitungselementen bei dem man

a) eine Mischung aus aromatischem und aliphatischen Polyisocyanat mit
b) mindestens einer polymeren Verbindung mit mindestens zwei gegenüber Isocyanat reaktiven Wasserstoffatomen,
c) Kettenverlängerungsmittel,
d) Katalysator und
e) gegebenenfalls sonstigen Hilfsmitteln und/oder Zusatzstoffen,
zu einer Reaktionsmischung vermischt, die Reaktionsmischung in eine Form gibt und zu einem Formteil aushärtet, das Formteil entformt und auf ein Leitungselement aufbringt, wobei die Kettenverlängererkennzahl KV der Isocyanate (a) sowie aller gegenüber Isocyanaten reaktiven Verbindungen der Komponenten (b) bis (e) gemäß der Formel (1)

$$KV = \frac{M(aromat.\ Isocyanat) \cdot NCO\ (aromat.\ Isocyanat) \cdot 56100}{M(Kettenverlängerer) \cdot OHZ(Kettenverlängerer) \cdot 4200} \cdot 100 \qquad (1)$$

1 bis 100 beträgt, wobei M(aromat. Isocyanat) für den Gewichtsanteil des aromatischen Isocyanats, angegebenen in Gew.-%, bezogen auf die Summe aus dem Gesamtgewicht an eingesetztem Isocyanat und gegenüber Isocyanaten reaktiven Verbindungen der Komponenten (b) bis (e), steht, NCO(aromat. Isocyanat) für den NCO-Gehalt des aromatischen Isocyanats, angegeben in Gew.-%, steht, und M(Kettenverlängerer) für den Gewichtsanteil des Kettenverlängerers, angegebenen in Gew.-%, bezogen auf die Summe aus dem Gesamtgewicht an eingesetztem Isocyanat und der gegenüber Isocyanaten reaktiven Verbindungen in den Komponenten (b) bis (e), steht.

3. Verfahren nach Anspruch 1 oder 2, **dadurch gekennzeichnet, dass** die Kettenverlängererkennzahl 30 bis 95 beträgt.

4. Verfahren nach einem der Ansprüche 1 bis 3, **dadurch gekennzeichnet, dass** der Kettenverlängerer (c) eine Funktionalität von 2 bis 4 und einer Hydroxylzahl von 500 bis 2500 mg KOH/g aufweist.

5. Verfahren nach einem der Ansprüche 1 bis 4, **dadurch gekennzeichnet, dass** das aliphatische Polyisocyanat ein Isocyanurat-, Allophanat- oder Biuret- modifiziertes aliphatisches Isocyanat enthält und der Anteil an freien aliphatischen Isocyanaten kleiner 1 % ist.

6. Verfahren nach Anspruch 5, **dadurch gekennzeichnet, dass** das aliphatische Isocyanat Isocyanurat, Allophanat und/oder Biuret aus Hexamethylendiisocyanat ist.

7. Mit Polyurethan beschichtete Leitungselemente, erhältlich nach einem Verfahren gemäß einem der Ansprüche 1 bis 6.

8. Mit Polyurethan beschichtete Leitungselemente nach Anspruch 7, **dadurch gekennzeichnet, dass** das mit Polyurethan beschichtete Leitungselement ein Rohr einer Off-Shore Pipeline, ein Field Joint einer Off Shore Pipeline oder ein Eruptionskreuz einer Off Shore Pipeline ist.

EP 2 743 284 A1

**Europäisches Patentamt**
**European Patent Office**
**Office européen des brevets**

**EUROPÄISCHER RECHERCHENBERICHT**

**Nummer der Anmeldung**

EP 12 19 7031

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2005/056629 A1 (BASF AG [DE]; HUNTEMANN PETER [DE]; SCHILLING UDO [DE]) 23. Juni 2005 (2005-06-23) | 1,2,7 | INV. C08G18/48 C08G18/66 |
| Y | * Seite 3, Zeilen 14-38; Ansprüche 1-10 * ----- | 3-6,8 | C08G18/72 C08G18/73 |
| Y | US 2011/094614 A1 (LEROY DIMITRI [BE] ET AL) 28. April 2011 (2011-04-28) * Absätze [0029], [0032], [0035] * ----- | 3-6,8 | C08G18/76 C08K3/34 C08G18/32 |

| RECHERCHIERTE SACHGEBIETE (IPC) |
|---|
| C08G C08K |

Der vorliegende Recherchenbericht wurde für alle Patentansprüche erstellt

| Recherchenort | Abschlußdatum der Recherche | Prüfer |
|---|---|---|
| München | 26. April 2013 | Buestrich, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

12

**ANHANG ZUM EUROPÄISCHEN RECHERCHENBERICHT
ÜBER DIE EUROPÄISCHE PATENTANMELDUNG NR.**

EP 12 19 7031

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-04-2013

| Im Recherchenbericht angeführtes Patentdokument | Datum der Veröffentlichung | Mitglied(er) der Patentfamilie | Datum der Veröffentlichung |
|---|---|---|---|
| WO 2005056629 A1 | 23-06-2005 | DE 10358368 A1 | 07-07-2005 |
| | | EP 1694736 A1 | 30-08-2006 |
| | | US 2007100027 A1 | 03-05-2007 |
| | | US 2011023989 A1 | 03-02-2011 |
| | | WO 2005056629 A1 | 23-06-2005 |
| US 2011094614 A1 | 28-04-2011 | CA 2726049 A1 | 14-01-2010 |
| | | CN 102089340 A | 08-06-2011 |
| | | EP 2182017 A1 | 05-05-2010 |
| | | EP 2300509 A1 | 30-03-2011 |
| | | US 2011094614 A1 | 28-04-2011 |
| | | WO 2010003788 A1 | 14-01-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005056629 A
- WO 2007042411 A
- WO 9903922 A
- WO 2010003788 A
- JP 1998000267980 B
- US 62655524 B

- DE 10256550
- WO 2004003424 A
- US 6000438 A
- WO 2002016733 A
- CN 101545565

**In der Beschreibung aufgeführte Nicht-Patentliteratur**

- Kunststoffhandbuch, Band 7, Polyurethane. Carl Hanser Verlag, 1993, vol. 7